# EUROPEAN PATENT SPECIFICATION

(11) **EP 1 653 752 B1**
(45) Date of publication and mention of the grant of the patent: **12.11.2008**
(21) Application number: 04762038.0
(22) Date of filing: 05.08.2004
(51) Int. Cl.: H04L 12/28, H04Q 7/38

(54) **AN INTERACTIVE METHOD OF A SUBSCRIBER TERMINAL DETERMINING THE NETWORK SELECTIVE INFORMATION IN WLAN**
INTERAKTIVES VERFAHREN, DURCH DAS EIN TEILNEHMERENDGERÄT NETZWERKSELEKTIVE INFORMATIONEN IN EINEM WLAN BESTIMMT
METHODE INTERACTIVE DE DETERMINATION PAR UN TERMINAL D'ABONNE D'INFORMATIONS DE SELECTION D'UN RESEAU LOCAL SANS FIL

(30) Priority: 07.08.2003 CN 03153209
(43) Date of publication of application: 03.05.2006
(73) Proprietor: Huawei Technologies Co., Ltd., Longgang District, Shenzhen, Guangdong 518129 (CN)
(72) Inventor: ZHANG, Wenlin, Shenzhen, Guangdong 518129 (CN)
(74) Representative: Reinhard - Skuhra - Weise & Partner
(86) International application number: PCT/CN2004/000902
(87) International publication number: WO 2005/071981

(56) References cited:
- EP-A- 1 643 676
- WO-A-03/030433
- WO-A-20/05002140
- WO-A1-03/047158
- CN-A- 1 399 490
- US-A1- 2003 119 481
- 3GPP: "3rd Generation Partnership Project; Technical Specification Group Services and System Aspects; 3GPP system to Wireless Local Area Network (WLAN) Internetworking; System Description (Release 6)" DRAFT 3GPP TS 23.234 V1.10.0, May 2003 (2003-05), pages 1-77, XP002264842

## Description

### Field of the invention

The present invention relates to network accessing techniques, and particularly, to an interactive method for user terminal determining network selection information in a wireless local area network (WLAN).

### Background of the invention

At users' demand for an increasingly high rate of wireless access, there emerges WLAN, which is able to provide high-rate wireless data access in a relatively small area. Various techniques have been used in WLAN, among which a technical standard with more applications is IEEE 802.11b. This standard utilizes the frequency band of 2.4GHz with a data transmission rate up to 11 Mbps. Other technical standards utilizing the same frequency band include IEEE 802.11g and the Bluetooth, wherein the data transmission rate of IEEE 802.11g is up to 54Mbps. There are other new standards such as IEEE 802.11a and ETSI BRAN Hiperlan2 which use the frequency band of 5GHz with the transmission rate up to 54 Mbps as well.

Although there are various standards for wireless access, most WLAN are used for transferring IP data packets. The specific WLAN access standard adopted by a wireless IP network is usually transparent to the upper-level IP. Such a network is typically configured with Access Points (AP) for implementing wireless access of WLAN user terminal, like WLAN user equipment (UE), and with network controlling and connecting devices for implementing IP transmission.

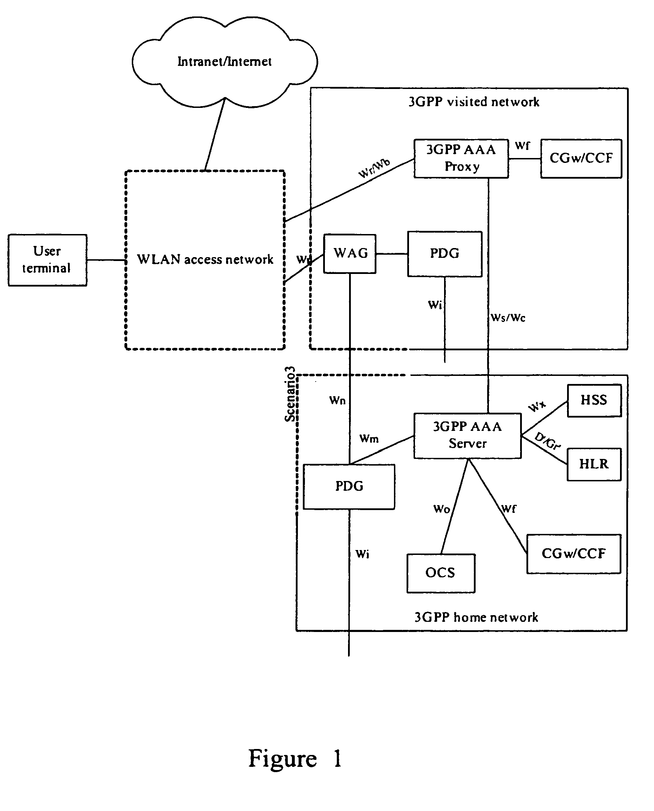

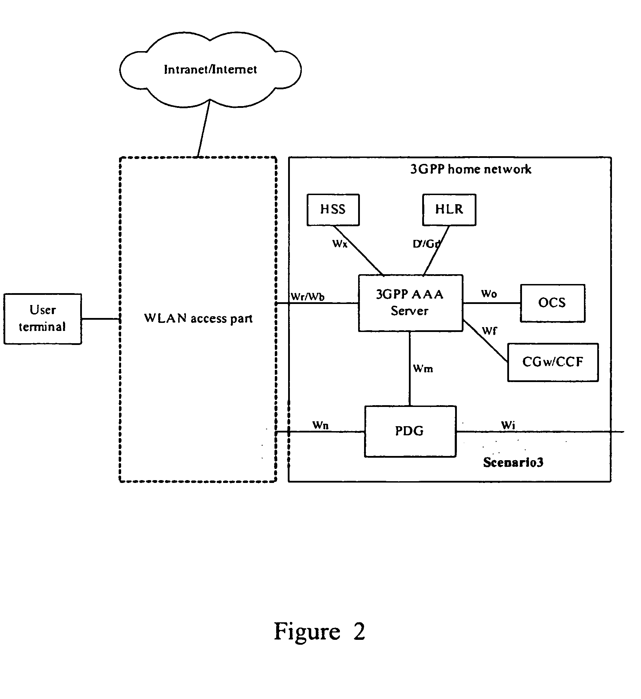

Along with the rising and developing of WLAN, focus of research is shifting to the inter-working of WLAN with various mobile communications networks, such as GSM, CDMA, WCDMA, TD-SCDMA, and CDMA2000. In accordance with the 3GPP standards, user terminal is able to connect with Internet and Intranet as well as the home network and visited network of a 3GPP system via a WLAN access network. To be specific, when getting accessed locally, a WLAN user terminal will get connected with the 3GPP home network via a WLAN access network, as shown in Figure 2; when roaming, it will get connected with the 3GPP visited network via the WLAN access network. Some entities of the 3GPP visited network are connected with corresponding entities of the 3GPP home network, for instance, the 3GPP Authentication, Authorization, Accounting (AAA) proxy in the visited network is connected with the 3GPP AAA server in the home network, the WLAN Access Gateway (WAG) in the visited network is connected with the Packet Data Gateway (PDG) in the home network, as shown in Figure 1. Figure 1 and Figure 2 are the schematic diagrams illustrating the networking architectures of a WLAN inter-working with a 3GPP system under roaming and non-roaming circumstances, respectively.

As shown in Figure 1 and Figure 2, a 3GPP system primarily comprises Home Subscriber Server (HSS)/ Home Location Register (HLR), 3GPP AAA server, 3GPP AAA proxy, WAG, PDG, Charging Gateway (CGw)/Charging information Collecting Function (CCF), and Online Charging System (OCS). User terminal, WLAN access network, and all the entities of the 3GPP system together constitute a 3GPP-WLAN inter-working network, which can be regarded as a WLAN service system. In this service system, 3GPP AAA server is in charge of authentication, authorization, and accounting of user terminal, collecting the charging information sent from the WLAN access network and transferring the information to the charging system; PDG is in charge of transmission of user data from the WLAN access network to the 3GPP network or other packet data networks; and the charging system mainly receives and records the charging information of user terminal transferred from the network while OCS instructs the network to transmit online charging information periodically in accordance with the expenses of the online charged users, makes statistics and conducts control.

Under non-roaming circumstances, when a WLAN user terminal desires to get accessed directly to the Internet/Intranet, the user terminal can access Internet/Intranet via a WLAN access network after it accomplishes authentication with the AAA server (AS) via the WLAN access network. Should the WLAN user terminal desire to get accessed to the service of 3GPP packet switched (PS) domain as well, it may further request the service of Scenario 3 from the 3GPP home network. That is, the WLAN user terminal initiates a service authorization request for Scenario 3 to the AS of the 3GPP home network, which will carry out service authentication and authorization for that request; if the authentication and authorization succeeds, AS will send an access accept message to the user terminal and assign a corresponding PDG for the user terminal. When a tunnel is established between the user terminal and the assigned PDG, the user terminal will be able to get accessed to the service of 3GPP PS domain. Meanwhile, the offline charging system and OCS records the charging information in accordance with the user terminal's occupation of the network. Under roaming circumstances, when a WLAN user terminal desires to get accessed directly to the Intemet/Intranet, it may make a request to the 3GPP home network by way of the 3GPP visited network for access to the Internet/Intranet. Should the user terminal also desire to request the service of Scenario 3 to get accessed to the service of the 3GPP PS domain, the user terminal needs to initiate via the 3GPP visited network a service authorization process at the 3GPP home network. The authorization is carried out likewise between the user terminal and AS of the 3GPP home network. After the authorization succeeds, AS assigns the corresponding home PDG for the user terminal, then the user terminal will be able to get accessed to the service of 3GPP PS domain of the home network after it establishes a tunnel with the assigned PDG via the WAG of the 3GPP visited network.

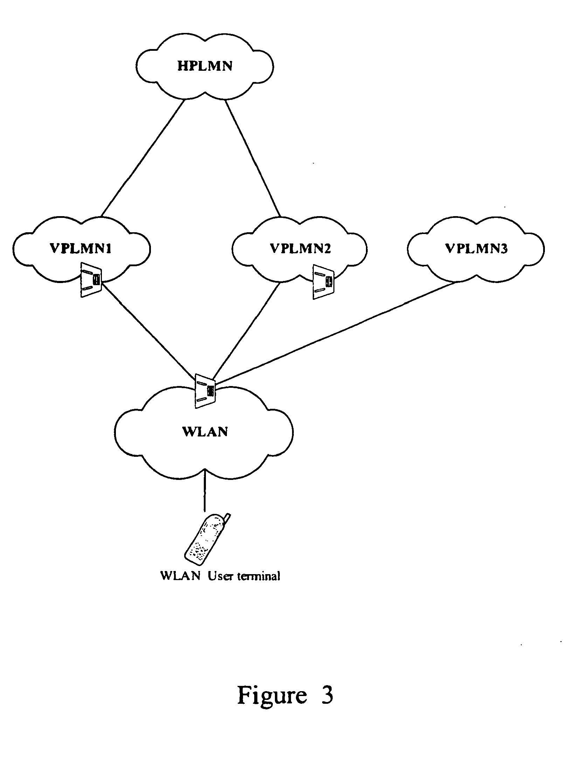

As shown in Figure 3, in a 3GPP-WLAN inter-working network, if a WLAN is connected at the same time with a plurality of 3GPP visited networks, that is, a plurality of wireless communication networks (3GPP visited networks herein refer to Visited Public Land Mobile Networks (VPLMN)) connected with the WLAN, it will be necessary for a WLAN user terminal to select the desired VPLMN to access after the user terminal gets accessed to the WLAN. For instance, in China, a WLAN access network may be connected simultaneously with two operating VPLMN, China Mobile and China Unicom; then a user of China Unicom, after getting accessed via the WLAN, has to instruct the WLAN access network to get it accessed to the operating VPLMN of China Unicom. For another instance, a French user may roam to a WLAN in China, if the home network of the French user has roaming protocols with both China Mobile and China Unicom, then under the circumstances that the WLAN access network is connected with both China Mobile and China Unicom, this French user needs to select the VPLMN to get accessed after accessing the WLAN.

A solution to network selection has been presented in another patent application, as shown by steps 401-408 in Figure 4: When WLAN user terminal gets access to a 3GPP-WLAN inter-working network via the WLAN, in accordance with this patent application, when the WLAN user terminal requests the first access after having set up a radio connection with the WLAN access network, authentication is carried out between the user terminal and the network and the network requests the user identity from the user terminal; then the user terminal will send a response message containing network selection information to the WLAN access network; the WLAN access network decides according to the contained network selection information whether the selected network is one of the wireless communication network connected with the WLAN, if so, the current user terminal will be connected to the selected network for authentication and subsequent process; otherwise, i.e. the selected network is not directly connected with the WLAN access network, then the network will issue a advertisement message to the current user terminal, and the user terminal will perform subsequent process in accordance with the advertisement message. The network selection information comprises the information of the wireless communication network to which the user terminal currently desires to get access, and this information may be placed in a field independently configured or placed in the user identity field defined in the format of Network Access Identifier (NAI) which comprises two portions, the username portion and the realm name portion.

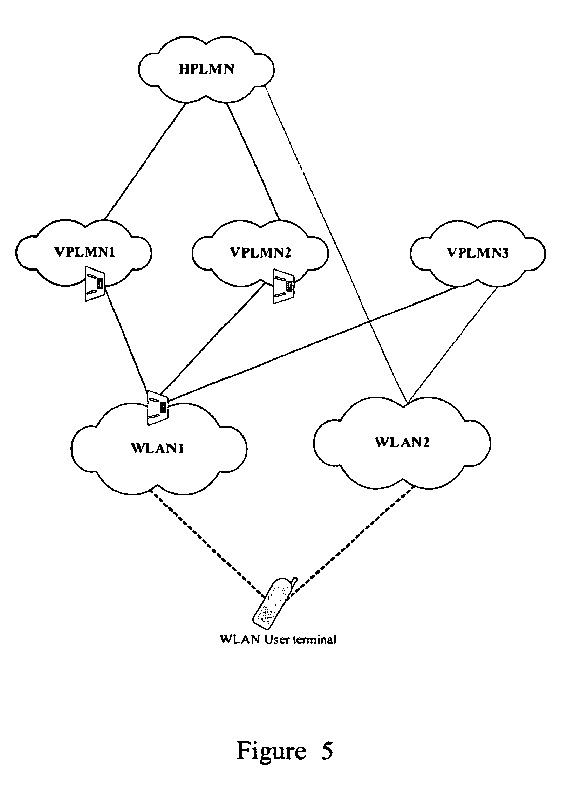

In Draft 3GPP TS 23.234 V1.10.0, 2003-05, XP-002264842, the basic deployment scenarios of multiple WLANs and multiple PLMNs are described. And some high level requirements to network discovery and selection are described. In some typical scenarios, WLANs and PLMNs are in a multiple-to-multiple relation, i.e. a WLAN may be connected to multiple PLMNs and a PLMN may be connected to multiple WLANs. In these cases, network discovery and selection mechanism are important to make the system work well. Though some guidelines are proposed to design the system, but there was not a complete and well-designed mechanism defined in the document to make the system work well. For example, if the current user terminal is covered by a plurality of WLAN networks simultaneously, the above solution can not guarantee to select the most proper PLMN to serve the user terminal. For instance, it can not guarantee the home network of the user terminal to be selected. Take the network architecture shown in Figure 5 as an example, the WLAN user terminal is simultaneously covered by WLAN1 and WLAN2, wherein WLAN1 is connected with three visited networks of the current user terminal, VPLMN1, VPLMN2, and VPLMN3 while WLAN2 is connected with the home network, HPLMN and the visited network, VPLMN3, of the current user terminal. In this case, the optimum selection for the current user terminal is the home network of this user terminal, HPLMN, but it is quite likely, based on the network selection solution in the prior art, that this user terminal will get accessed via WLAN1 while the networks directly connected with WLAN1 for the user terminal to make a selection are all roaming networks. As a result, the user terminal has no chance to select its home network directly connected with WLAN2. So far, there has been no specific solution to the procedure by which user terminal is able to select the most proper wireless communication network whenever it gets accessed.

### Summary of the invention

The present invention provides an interactive method for determining network selection information of user terminal in a WLAN such that user terminal covered by more than one WLAN could select according to its need an appropriate wireless communication network to access.

To attain the above object, the solution provided by this invention is implemented as follows:
An interactive method for determining network selection information of a user terminal in a WLAN, comprising the steps of:
   a. the user terminal covered by more than one WLAN selecting one from all WLANs that are detected but have not been selected by the user terminal, and sending initial network selection information to the selected WLAN access network;
   b. deciding whether the selected WLAN access network is able to route an authentication request to a wireless communication network indicated in the initial network selection information, if it is able to route an authentication request, sending the authentication request to the wireless communication network indicated in the initial network selection information, and ending the current network selection procedure; otherwise, advertising the user terminal of information of wireless communication networks connected with the selected WLAN access network, the user terminal storing the received information and deciding whether there is a remaining WLAN that has not been selected, if there is, going back to the step a; if there is not, ending the current network selection procedure.
      If there is no WLAN that has not been selected, the method further comprises:
c. the user terminal selects a wireless communication network desired to access based on the stored information of the wireless communication networks, and sends the information of the selected wireless communication network as the network selection information to the WLAN access network corresponding to the selected wireless communication network.

The method further comprises: preset an initial network selection in the user terminal.

Step a further comprises:
a1. after selecting a WLAN, the user terminal sets up a radio connection with the selected WLAN access network; the selected WLAN access network or the user terminal initiates an authentication procedure, and the selected WLAN access network sends a username request message to the user terminal;
a2. upon receiving the username request message, the user terminal returns a response message containing the initial network selection information to the selected WLAN access network.

The initial network selection is the home network of the user terminal.

The method further comprises after step c:
d. the WLAN access network that has received the network selection information of the user terminal sends the authentication request of the user terminal to the wireless communication network indicated in the network selection information.

In step c, the user terminal selects an optimum wireless communication network to access according to a preset criterion for determining the optimum visited network. The criterion for determining the optimum visited network is determined by such factors as service charge rate, network bandwidth, network speed, network capacity, and the services that could be provided for the user terminal.

In step b, the selected WLAN access network sends to the user terminal the information of all the wireless communication networks directly connected with the selected WLAN access network. Or, in step b, the selected WLAN access network sends to the user terminal the information of all the wireless communication networks that are directly connected with the selected WLAN access network and have roaming relations with the home network indicated in the initial network selection information.

The procedure of advertising the user terminal of the information of the wireless communication networks in step b is performed by a first hop AAA functionality associated with the user terminal. The first hop AAA functionality is one of an access controller (AC), an access point (AP) and a local AAA server. The first hop AAA functionality is located in one of a WLAN access network and a PLMN.

In accordance with the interactive method for determining network selection information of user terminal in a WLAN, the user terminal covered by more than one WLAN is able to inquire each of the detected WLAN successively in turn with the preset initial network selection information and decide whether the user terminal can access the initially selected network via a WLAN, if not, the user terminal may select any of the wireless communication networks to access. In this way, user terminal is able to select a relatively optimum wireless communication network to access when it is covered by a plurality of WLANs such that the user could be provided with better services.

### Brief description of the drawings

Figure 1 is a schematic diagram illustrating the network architecture of inter-working WLAN system and 3GPP system under roaming circumstances;
Figure 2 is a schematic diagram illustrating the network architecture of inter-working WLAN system and 3GPP system under non-roaming circumstances;
Figure 3 is a schematic diagram illustrating the network architecture of WLAN connecting with a plurality of visited networks;

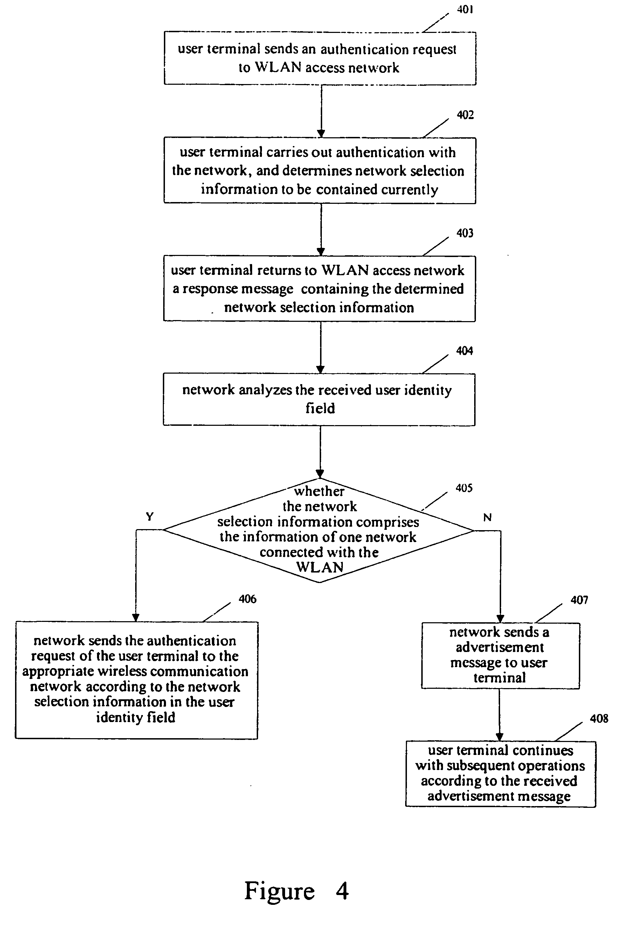

Figure 4 is the flowchart of interactive processing of the network selection information of user terminal in accordance with the present invention;
Figure 5 is a schematic diagram illustrating the network architecture with the current user terminal covered by a plurality of WLANs;
Figure 6 is the flowchart for implementing the method in accordance with the present invention;
Figure 7 is the flowchart of interactive processing for determining network selection information in accordance with the first embodiment of the present invention;
Figure 8 is the flowchart of interactive processing for determining network selection information in accordance with the second embodiment of the present invention;
Figure 9 is the flowchart of interactive processing for determining network selection information in accordance with the third embodiment of the present invention.

### Detailed description of preferred embodiments

The key idea of this invention is as follows: a user terminal covered by more than one WLAN inquires each detected WLAN successively in turn using the initial network selection information, if the WLAN access network is directly connected with the initially selected network of the user terminal, the initially selected network of the user terminal is determined as the network to be accessed; if the WLAN access network is not directly connected with the initially selected network of the user terminal, the networks directly connected with the next WLAN are inquired successively in turn, and so on, until a WLAN directly connected with the initially selected network of the user terminal is found; if networks connected with all the WLANs have been inquired and there is no WLAN access network that is directly connected with the initially selected network of the user terminal, select an optimum visited network to access based on the information of wireless communication network issued by the access networks and the priority conditions set by the user, or present the information to the user so that the user selects a network to access.

Here, the network selection information refers to the information of the wireless communication network that the user terminal currently desires to access and is connected with WLANs. The network selection information may be placed in a separately-configured field in an authentication request or placed in a user identity field of an authentication request, and the user identity is defined in the format of NAI. The initially selected network of each user terminal is preset and may be the home network of each user terminal.

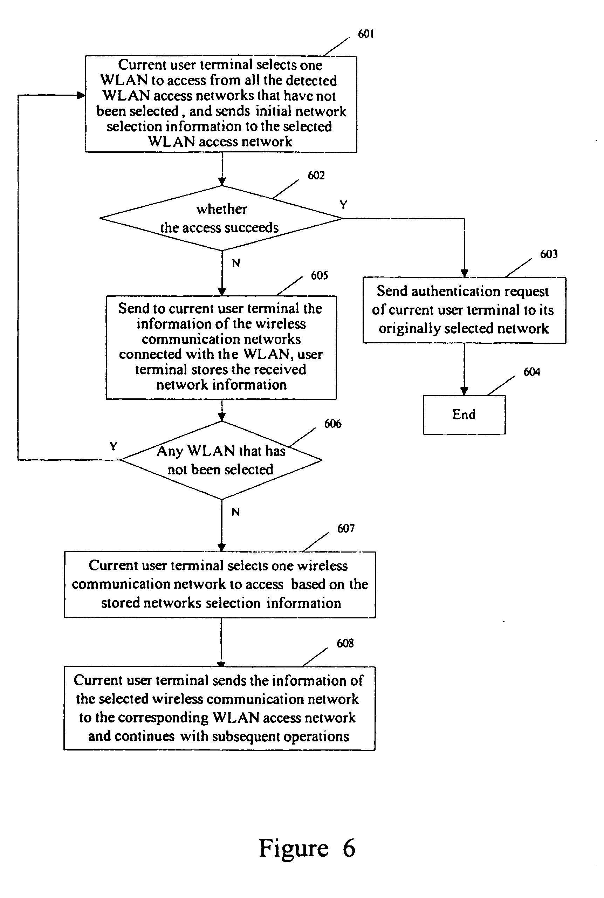

Based on the network architecture shown in Figure 5, when a WLAN user terminal accesses a 3GPP-WLAN inter-working network via the WLAN, the user terminal makes WLAN detection and detects more than one WLAN, starts an interactive processing for determining the network selection information in accordance with the present invention. As shown in Figure 6, the interactive processing comprises the steps of:
Step 601: The user terminal selects one from all the WLANs that have been detected but not selected to access. The selection here may comprise a selection at will or a selection based on a certain criterion, for example, signal intensity.
   Then an authentication procedure is initiated by the WLAN user terminal or the WLAN. Take the authentication procedure initiated by WLAN user terminal as an example. The WLAN user terminal will first send an authentication request to the currently selected WLAN access network; after receiving the request, the WLAN access network starts an authentication procedure with the user terminal, and the user terminal uses the initial network selection information as the network selection information. Specifically, the WLAN access network sends a user identity request message to the user terminal, requesting the username of the user terminal; after receiving the request, the user terminal sends to the WLAN access network a response message containing the information of the initially selected network of the user terminal.
Steps 602 ~ 605: After receiving the response message, the WLAN access network makes analysis of the user identity field of the response message; decides whether the network selection information contained in the user identity field indicates a wireless communication network connected with the WLAN, if so, i.e. WLAN1 is directly connected with the initially selected network of the user terminal and WLAN1 is able to route an authentication request to the selected network, determines that the wireless communication network the user terminal desires to access is its initially selected network, sends the authentication request of the user terminal to its home network for authentication, and ends the current process; otherwise, i.e. WLAN1 is not directly connected with the initially selected network of the user terminal, the network issues to the user terminal the information of the wireless communication networks connected with the currently selected WLAN and the user terminal saves all the network information issued, and go to step 606.
Steps 606 ~ 608: decide whether there is an WLAN that has not been selected to access, if there is, return to step 601, and likewise, the selection may be a selection at will or a selection based on a certain criterion; if there is not, the user terminal selects one from all the saved wireless communication networks to access, and sends to the WLAN access network corresponding to the selected wireless communication network the information of the selected wireless communication network as the network selection information to execute the subsequent operations. Here, the user terminal may, based on the preset criterion for determining the optimum visited network, select the optimum wireless communication network to access. The criterion for determining the optimum visited network is determined by such factors as the service charge rate, bandwidth, speed, and capacity of each wireless communication network as well as the services that could be provided for user terminal by the network. Obviously, the user terminal may display the available networks for the user, who will make the selection.

In the above solution, steps 607 and 608 may be omitted, i.e. end the current process if the initially selected network has not been successfully accessed after all the detected WLAN have been inquired successively, and no further selection of wireless communication network will be made to get accessed.

In the above solution, the information of wireless communication networks provided by the WLAN for user terminal to make a selection is saved in a special network information storing unit. Typically, such information includes such parameters as network name, QoS of network bearer capability, bandwidth, service capacity, WLAN inter-working scenarios that could be provided, charging rate, and types of service provider. When issuing the information of the wireless communication networks connected with the WLAN, the WLAN may issue the information of all the wireless communication networks connected with the WLAN, or select the information of the visited networks having roaming relations with the home network indicated by the user terminal to issue, or issue no information if there is no such visited network, or notify the user that no roaming relations are existed. The procedure of issuing the information of all the wireless communication networks may be performed by a first AAA functionality associated with the user terminal such as access controller (AC), access point (AP) or local Authentication Authorization Accounting (AAA) server. Commonly, the first hop AAA functionality is located in a WLAN access network or a PLMN.

### Embodiment 1:

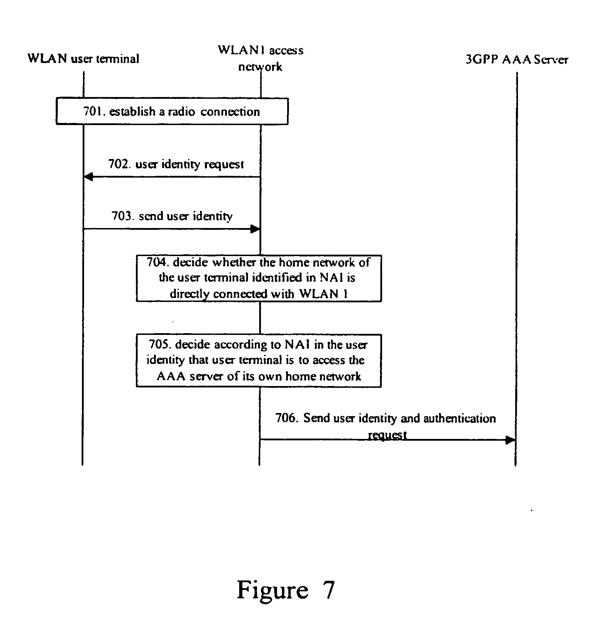

In the 3GPP-WLAN inter-working network of this embodiment, WLAN1 is directly connected with the home network of the user terminal, the user terminal inquires successively in turn the networks connected with WLAN1 using the information of its home network as the initial network selection information, and succeeds in accessing its home network via WLAN1. As shown in Figure 7, the interactive processing for determining network selection information in this embodiment comprises the steps of:
Steps 701 ~ 703: When accessing a 3GPP-WLAN inter-working network via WLAN1, the user terminal first set up connection with WLAN1 access network; and then WLAN1 access network sends to the user terminal a user identity request; after receiving this request, the WLAN user terminal sends to WLAN1 access network a response message containing the information of the home network of the user terminal.
Steps 704 - 706: After receiving the response, WLAN1 access network finds that the home network of the user terminal identified in the message is a wireless communication network connected with WLAN1, then further determines an AAA server of the home network the user terminal desires to access; and after that, sends the user identity of the user terminal and an authentication request to the 3GPP AAA server of the home network of the user terminal for authentication.

### Embodiment 2:

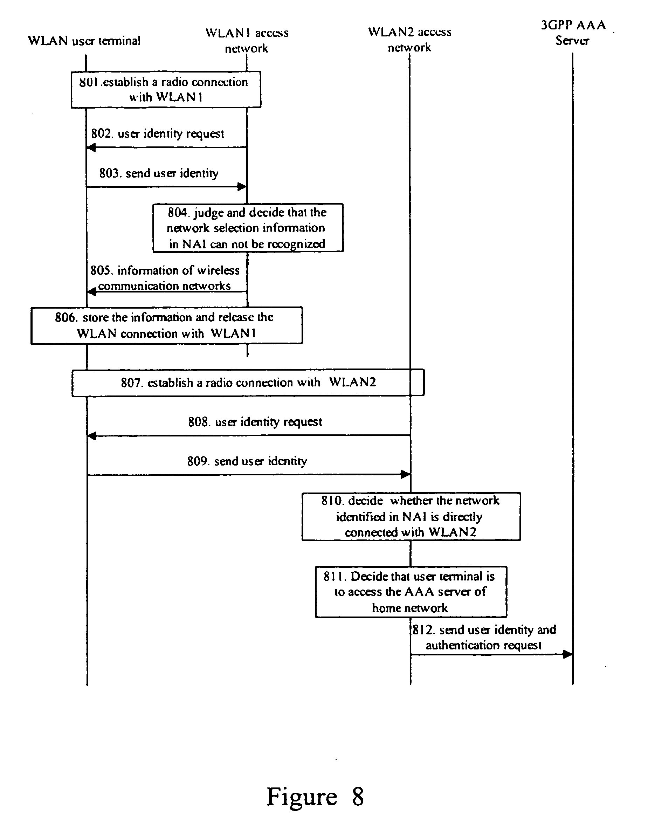

In the 3GPP-WLAN inter-working network of this embodiment, WLAN1 is not directly connected with the home network of the user terminal; WLAN2 is directly connected with the home network of the user terminal. The user terminal first inquires successively in turn the networks connected with WLAN1 using the information of its home network as the initial network selection information, but fails to get accessed; then the user terminal inquires successively in turn the networks connected with WLAN2 using the information of its home network as the initial network selection information as well, and succeeds in accessing its home network via WLAN2. As shown in Figure 8, the interactive processing for determining network selection information in this embodiment comprises the steps of:
Steps 801 - 803: Completely the same as steps 701 ~ 703 in Embodiment 1.
Steps 804 - 806: After receiving the response, WLAN1 decides whether the home network of the user terminal identified in the message is a wireless communication network connected with WLAN1, and finds that it is not, then WLAN1 issues to the user terminal the information of the wireless communication networks connected with WLAN1; after receiving this information, the user terminal saves the information and then disconnects the radio connection with WLAN1.
Steps 807 ~ 809: The user terminal sets up a radio connection with WLAN2 access network, WLAN2 access network sends a user identity request to the user terminal; after receiving this request, the WLAN user terminal sends a response message containing the information of the home network of the user terminal.
Steps 810~812: After receiving the response, WLAN2 access network finds that the home network of the user terminal identified in the message is a wireless communication network connected with WLAN2, then further determines an AAA server of the home network the user terminal desires to access; and sends the user identity of the user terminal and an authentication request to the 3GPP AAA server of the home network of the user terminal for authentication.

### Embodiment 3:

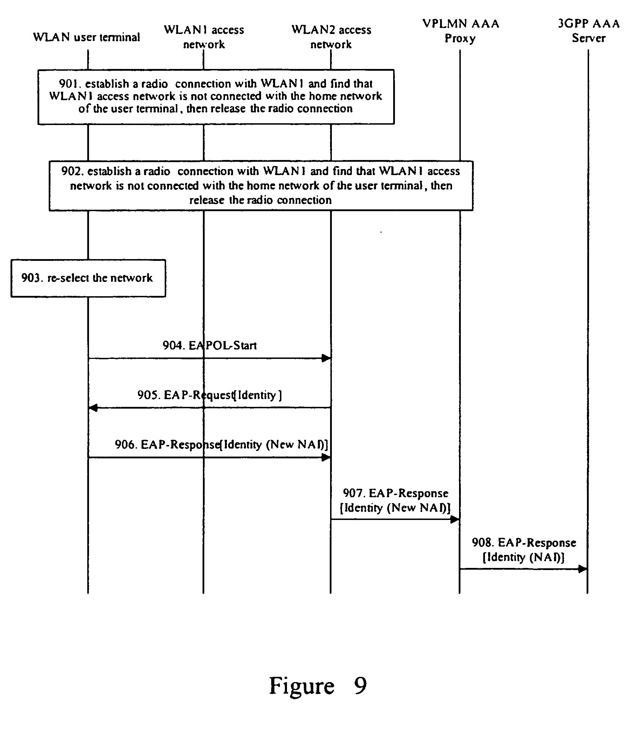

In the 3GPP-WLAN inter-working network of this embodiment, neither WLAN1 nor WLAN2 is directly connected with the home network of the user terminal. The user terminal first inquires successively in turn the networks connected with WLAN1 using the information of its home network as the initial network selection information, but fails to get accessed; then the user terminal inquires successively in turn the networks connected with WLAN2 using the information of its home network as the initial network selection information as well, but fails again to get accessed; finally, the user terminal selects an optimum wireless communication network from all those that are connected with WLAN1 and WLAN2 to access. As shown in Figure 9, the interactive processing for determining network selection information in this embodiment comprises the steps of:
Step 901: Set up a radio connection with WLAN1 access network, send to WLAN1 access network a response message containing the information of the home network of the user terminal; after receiving the response message, WLAN1 finds that the home network of the user terminal is not connected with WLAN1 access network, then sends to the user terminal the information of the wireless communication networks connected with WLAN1, the user terminal saves the information received, and then WLAN1 removes the radio connection with the user terminal.
Step 902: Set up a radio connection with WLAN2 access network, send to WLAN2 access network a response message containing the information of the home network of the user terminal; after receiving the response message, WLAN2 finds that the home network of the user terminal is not connected with WLAN2 access network, then sends to the user terminal the information of the wireless communication networks connected with WLAN2; the user terminal saves the information received, and then WLAN2 removes the radio connection with the user terminal.
Steps 903 ~ 904: The user terminal selects one wireless communication network connected with WLAN2 access network from all the wireless communication networks of which the information has been saved in the user terminal, and then actively initiates an authentication procedure again to WLAN2 by means of the initial authentication message EAPOL-Start.
Steps 905 ~ 906: After receiving the EAPOL-Start message, WLAN2 access network issues the EAP-Request[Identity] message again to the user terminal, requesting the user identity; the WLAN user terminal returns to WLAN2 access network the user identity containing the new network selection information by means of the EAP-Response[Identity] message.
Step 907 ~ 908: After receiving the new user identity, WLAN2 access network determines, according to the new network selection information therein, the wireless communication network selected by the user terminal, and sends an authentication request of the user terminal to the AAA proxy and AS of the network identified by the network selection information for authentication.

The foregoing description is only preferred embodiments of the present invention and should not be construed as limiting the protection scope of this invention.

## Claims

1. An interactive method for determining network selection information of a user terminal in a wireless local area network (WLAN), comprising the steps of:
a. the user terminal covered by more than one WLAN selecting one from all WLANs that are detected but have not been selected by the user terminal, and sending initial network selection information to the selected one WLAN access network (601);
b. deciding whether the selected WLAN access network is able to route an authentication request to a wireless communication network indicated in the initial network selection information (602), if it is able to route an authentication request, sending the authentication request to the wireless communication network indicated in the initial network selection information (603), and ending the current network selection procedure (604); otherwise, advertising the user terminal of information of wireless communication networks connected with the selected WLAN access network, the user terminal storing the received information (605) and deciding whether there is a remaining WLAN that has not been selected (606), if there is, going back to the step a; if there is not, ending the current network selection procedure.

2. The method according to Claim 1, further comprising if there is no remaining WLAN that has not been selected:
c. the user terminal selecting a wireless communication network desired to access based on the stored information of the wireless communication networks (607), and sending the information of the selected wireless communication network as the network selection information to the WLAN access network corresponding to the selected wireless communication network (608).

3. The method according to Claim 1, further comprising: presetting an initial network selection in the user terminal.

4. The method according to Claim 1, wherein the step a further comprises:
a1. after selecting a WLAN, the user terminal setting up a radio connection with the selected WLAN access network (701, 801, 807); the selected WLAN access network or the user terminal initiating an authentication procedure, and the selected WLAN access network sending a username request message to the user terminal (702, 802, 808);
a2. upon receiving the username request message, the user terminal returning a response message containing the initial network selection information to the selected WLAN access network (703, 803, 809).

5. The method according to Claim 1, 3 or 4, wherein the initial network selection is the home network of the user terminal.

6. The method according to Claim 2, further comprising after the step c:
d. the WLAN access network that has received the network selection information of the user terminal sending the authentication request of the user terminal to the wireless communication network indicated in the network selection information (706) (812).

7. The method according to Claim 2, wherein in the step c, the user terminal selects an optimum wireless communication network to access according to a preset criterion for determining the optimum visited network (607).

8. The method according to Claim 7, wherein the criterion for determining the optimum visited network is determined by such factors as service charge rate, network bandwidth, network speed, network capacity, and the services that could be provided for the user terminal.

9. The method according to Claim 1, wherein in the step b, the selected WLAN access network sends to the user terminal the information of all the wireless communication networks directly connected with the selected WLAN access network (805).

10. The method according to Claim 1, wherein in the step b, the selected WLAN access network sends to the user terminal the information of all the wireless communication networks that are directly connected with the selected WLAN access network and have roaming relations with the home network indicated in the initial network selection information (805).

11. The method according to Claim 1, wherein the procedure of advertising the user terminal of the information of the wireless communication networks in step b is performed by a first hop authentication authorization accounting (AAA) functionality associated with the user terminal.

12. The method according to Claim 11, wherein the first hop AAA functionality is one of an access controller (AC), an access point (AP) and a local AAA server.

13. The method according to Claim 11, wherein the first hop AAA functionality is located in one of a WLAN access network and a public land mobile network (PLMN).

## Patentansprüche

1. Interaktives Verfahren, um eine Netzauswahlinformation eines Nutzerendgerätes in einem lokalen Funknetz (WLAN) zu bestimmen, welches die folgenden Schritte aufweist:
a. Das Nutzerendgerät, welches durch mehr als ein WLAN versorgt wird, wählt eines von allen WLANs aus, welche detektiert werden, jedoch nicht durch das Nutzerendgerät ausgewählt wurden, und sendet eine Anfangsnetzauswahlinformation an das ausgewählte eine WLAN-Zugriffsnetz (601);
b. Entscheiden, ob das ausgewählte WLAN-Zugriffsnetz in der Lage ist, eine Authentifizierungsanforderung an ein Funkkommunikationsnetz zu routen, welches in der Anfangsnetzauswahlinformation angezeigt ist (602), wenn es in der Lage ist, eine Authentifizierungsanforderung zu routen, Senden der Authentifizierungsanforderung an das Funkkommunikationsnetz, welches in der Anfangsnetzauswahlinformation angezeigt ist (603), und Beenden des aktuellen Netzauswahlverfahrens (604); anderenfalls Anbieten von Information über Funkkommunikationsnetze, welche mit dem ausgewählten WLAN-Zugriffsnetz verbunden sind, dem Nutzerendgerät, wobei das Nutzerendgerät die empfangene Information speichert (605), und Entscheiden, ob es ein verbleibendes WLAN gibt, welches nicht ausgewählt wurde (606), wenn es eines gibt, Zurückgehen zu dem Schritt a.; wenn es keines gibt, Beenden des aktuellen Netzauswahlverfahrens.

2. Verfahren nach Anspruch 1, welches ferner aufweist, falls es kein verbleibendes WLAN gibt, welches nicht ausgewählt wurde:
c. das Nutzerendgerät wählt ein Funkkommunikationsnetz, auf welches es zuzugreifen wünscht, basierend auf der gespeicherten Information der Funkkommunikationsnetze aus (607), und Senden der Information des ausgewählten Funkkommunikationsnetzes als Netzauswahlinformation an das WLAN-Zugriffsnetz entsprechend dem ausgewählten Funkkommunikationsnetz (608).

3. Verfahren nach Anspruch 1, welches ferner aufweist: Voreinstellen einer Anfangsnetzauswahl in dem Nutzerendgerät.

4. Verfahren nach Anspruch 1, wobei der Schritt ferner aufweist:
a1. Nach dem Auswählen eines WLAN erstellt das Nutzerendgerät eine Funkverbindung mit dem ausgewählten WLAN-Zugriffsnetz (701, 801, 807); das ausgewählte WLAN-Zugriffsnetz oder das Nutzerendgerät initiiert ein Authentifizierungsverfahren, und das ausgewählte WLAN-Zugriffsnetz sendet eine Benutzemame-Anforderungsnachricht an das Benutzerendgerät (702, 802, 808);
a2. beim Empfangen der Benutzername-Anforderungsnachricht schickt das Nutzerendgerät eine Rückantwortnachricht, welche die Anfangsnetzauswahlinformation enthält, an das ausgewählte WLAN-Zugriffsnetz (703, 803, 809).

5. Verfahren nach Anspruch 1, 3 oder 4, wobei die Anfangsnetzauswahl das Heimatnetz des Benutzerendgerätes ist.

6. Verfahren nach Anspruch 2, welches ferner nach dem Schritt c aufweist:
d. Das WLAN-Zugriffsnetz, welches die Netzauswahlinformation des Benutzerendgerätes empfangen hat, sendet die Authentifizierungsanforderung des Benutzerendgerätes an das Funkkommunikationsnetz, welches in der Netzauswahlinformation angezeigt ist (706) (812).

7. Verfahren nach Anspruch 2, wobei in dem Schritt c das Benutzerendgerät ein optimales Funkkommunikationsnetz auswählt, um entsprechend einem voreingestellten Kriterium zuzugreifen, um das optimal besuchte Netz zu bestimmen (607).

8. Verfahren nach Anspruch 7, wobei das Kriterium, um das optimal besuchte Netz zu bestimmen, durch Faktoren, wie Dienstbelastungsrate, Netzbandbreite, Netzgeschwindigkeit, Netzkapazität und die Dienste, welche für das Benutzerendgerät geliefert werden könnten, bestimmt ist.

9. Verfahren nach Anspruch 1, wobei in dem Schritt b das ausgewählte WLAN-Zugriffsnetz an das Benutzerendgerät die Information aller Funkkommunikationsnetze sendet, welche direkt mit dem ausgewählten WLAN-Zugriffsnetz verbunden sind (805).

10. Verfahren nach Anspruch 1, wobei in dem Schritt b das ausgewählte WLAN-Zugriffsnetz an das Benutzerendgerät die Information aller Funkkommunikationsnetze sendet, welche direkt mit dem ausgewählten WLAN-Zugriffsnetz verbunden sind und Roaming-Beziehungen mit dem Heimatnetz besitzen, welches in der Anfangsnetzauswahlinformation angezeigt ist (805).

11. Verfahren nach Anspruch 1, wobei das Verfahren des Anbietens von Information der Funkkommunikationsnetze dem Benutzerendgerät im Schritt b durch eine erste Hop-Authentifizierungsautorisations-Berechnungs-(AAA-)Funktionalität durchgeführt wird, welche zu dem Benutzerendgerät gehört.

12. Verfahren nach Anspruch 11, wobei die erste Hop-AAA-Funktionalität entweder von einem Zugriffssteuerglied (AC), einem Zugriffspunkt (AP) oder einem lokalen AAA-Server ist.

13. Verfahren nach Anspruch 11, wobei die erste Hop-AAA-Funktionalität entweder in einem WLAN-Zugriffsnetz oder einem öffentlichen Mobilnetz (PLMN) plaziert ist.

## Revendications

1. Procédé interactif de détermination d'informations de sélection de réseau d'un terminal d'utilisateur dans un réseau local sans fil (WLAN), comprenant les étapes consistant à :
a. le terminal d'utilisateur couvert par plus d'un WLAN sélectionne l'un parmi les WLAN qui sont détectés mais qui n'ont pas été sélectionnés par le terminal d'utilisateur et envoie des informations de sélection de réseau initiale au réseau d'accès au WLAN sélectionné (601) ;
b. décider si le réseau d'accès au WLAN sélectionné est capable d'acheminer une demande d'authentification à un réseau de communication sans fil indiqué dans les informations de sélection de réseau initiale (602) ; s'il est capable d'acheminer une demande d'authentification, envoyer la demande d'authentification au réseau de communication sans fil indiqué dans les informations de sélection de réseau initiale (603), et terminer la procédure de sélection de réseau en cours (604) ; sinon, annoncer au terminal d'utilisateur les informations des réseaux de communication sans fil connectés au réseau d'accès au WLAN sélectionné, le terminal d'utilisateur mémorisant les informations reçues (605) et décidant s'il reste un WLAN qui n'a pas été sélectionné (606) ; si tel est le cas, revenir à l'étape a ; si tel n'est pas le cas, terminer la procédure de sélection de réseau en cours.

2. Procédé selon la revendication 1, comprenant en outre l'étape consistant à ce que, s'il ne reste pas de WLAN qui n'a pas été sélectionné :
c. le terminal d'utilisateur sélectionne un réseau de communication sans fil souhaité auquel accéder sur la base des informations mémorisées des réseaux de communication sans fil (607), et envoie les informations du réseau de communication sans fil sélectionné en tant qu'informations de sélection de réseau au réseau d'accès au WLAN correspondant au réseau de communication sans fil sélectionné (608).

3. Procédé selon la revendication 1, comprenant en outre l'étape consistant à prérégler une sélection de réseau initiale dans le terminal d'utilisateur.

4. Procédé selon la revendication 1, dans lequel l'étape a comprend en outre les étapes consistant à ce que :
a1. après la sélection d'un WLAN, le terminal d'utilisateur établit une connexion de radiocommunications avec le réseau d'accès au WLAN sélectionné (701, 801, 807) ; le réseau d'accès au WLAN sélectionné ou le terminal d'utilisateur lance une procédure d'authentification, et le réseau d'accès au WLAN sélectionné envoie un message de demande de nom d'utilisateur au terminal d'utilisateur (702, 802, 808) ;
a2. à la réception du message de demande de nom d'utilisateur, le terminal d'utilisateur renvoie un message de réponse contenant les informations de sélection de réseau initiale au réseau d'accès au WLAN sélectionné (703, 803, 809).

5. Procédé selon la revendication 1, 3 ou 4, dans lequel la sélection de réseau initiale est le réseau de base du terminal d'utilisateur.

6. Procédé selon la revendication 2, comprenant en outre, après l'étape c, l'étape consistant à ce que :
d. le réseau d'accès au WLAN qui a reçu les informations de sélection de réseau du terminal d'utilisateur envoie la demande d'authentification du terminal d'utilisateur au réseau de communication sans fil indiqué dans les informations de sélection de réseau (706) (812).

7. Procédé selon la revendication 2, dans lequel, à l'étape c, le terminal d'utilisateur sélectionne un réseau de communication sans fil optimal auquel accéder en fonction d'un critère préréglé pour déterminer le réseau visité optimal (607).

8. Procédé selon la revendication 7, dans lequel le critère pour déterminer le réseau visité optimal est déterminé par des facteurs comme le tarif de facturation de service, la bande passante de réseau, la vitesse de réseau, la capacité de réseau et les services qui peuvent être fournis pour le terminal d'utilisateur.

9. Procédé selon la revendication 1, dans lequel, à l'étape b, le réseau d'accès au WLAN sélectionné envoie au terminal d'utilisateur les informations de tous les réseaux de communication sans fil directement connectés au réseau d'accès au WLAN sélectionné (805).

10. Procédé selon la revendication 1, dans lequel, à l'étape b, le réseau d'accès au WLAN sélectionné envoie au terminal d'utilisateur les informations de tous les réseaux de communication sans fil qui sont directement connectés au réseau d'accès au WLAN sélectionné et ont des relations d'itinérance avec le réseau de base indiqué dans les informations de sélection de réseau initiale (805).

11. Procédé selon la revendication 1, dans lequel la procédure d'annonce au terminal d'utilisateur des informations des réseaux de communication sans fil à l'étape b est effectuée par une première fonctionnalité de comptabilisation d'autorisation d'authentification (AAA) de saut associée au terminal d'utilisateur.

12. Procédé selon la revendication 11, dans lequel la première fonctionnalité AAA de saut est l'un d'un contrôleur d'accès (AC), un point d'accès (AP) et un serveur AAA local.

13. Procédé selon la revendication 11, dans lequel la première fonctionnalité AAA de saut est située dans l'un d'un réseau d'accès au WLAN et d'un réseau mobile terrestre public (PLMN).
